# EUROPEAN PATENT APPLICATION

(11) **EP 3 611 697 A1**
(43) Date of publication of application: **19.02.2020**
(21) Application number: 19186718.3
(22) Date of filing: 17.07.2019
(51) Int. Cl.: G06T 7/00

(54) **METHOD OF DETECTING ROTOR BLADE DAMAGE**

(30) Priority: 17.08.2018 GB 201813432
(71) Applicant: Rolls-Royce plc, London SW1E 6AT (GB)
(72) Inventor: Eastment, Benjamin, Derby, Derbyshire DE24 8BJ (GB)
(74) Representative: Rolls-Royce plc

(57) **Abstract**

A method of detecting rotor blade damage on a gas turbine engine is provided comprising the steps of taking an image of a rotor blade, processing the image to produce a blade profile using an edge detection algorithm and determining a rotor blade error by comparing the blade profile with a geometric model of a corresponding blade.

## Description

The present disclosure concerns a method for detecting rotor blade damage, a gas turbine engine, a geared turbofan, an aircraft and an apparatus of detecting rotor blade damage.

During operation of a gas turbine engine, it is possible that the gas turbine engine can become damaged due to ingestion of foreign bodies, or from parts of the gas turbine engine that become detached. Ingestion of foreign bodies, for example birds, or objects in the air at take-off, can damage the gas turbine blades, for example the fan blades. Damage from foreign bodies is referred to as foreign objection damage (FOD). Damage from parts of the gas turbine engine that have become detached is referred to as domestic object damage (DOD). If one or more of the rotor blades, for example fan blades, becomes damaged, this can cause a reduction in efficiency of the rotor. The damage to one or more rotor blades, for example fan blades, may also cause undesirable vibration of the rotor due to the imbalance caused by the damage. In the extreme event, the FOD or DOD may involve the release of a rotor blade.

Different known solutions exist for detecting the presence of FOD or DOD. The measurement of the vibration from the rotor may be used to detect an unbalance which may be indicative of damage to one or more rotor blades. However this method requires verification by visual inspection, which may involve endoscopy, on the ground after the flight. Further the vibrational method is incapable of detecting a situation where one or more rotor blades become damaged but which does not lead to an unbalanced rotor, or to an unbalance which is too small to be detected (for example due to interference from other vibrating parts of the gas turbine engine). Ground inspections can be time consuming and costly, and require being programmed in advance. Further the pilot may be unaware of the extent of the damage to the rotor or gas turbine engine and therefore would not know how to respond appropriately, for example to alter the operation of the gas turbine engine, until the ground inspection has been carried out and the cause of the anomaly identified.

It is therefore desirable to have an improved method of detecting the presence of FOD or DOD, for example during operation of the gas turbine engine. It is therefore desirable to have an improved method of diagnosing FOD or DOD damage, for example during operation of the gas turbine engine.

According to an aspect there is provided a method (for example a computer implemented method) of detecting rotor blade damage on a gas turbine engine comprising the steps of taking an image of a rotor blade, processing the image to produce a blade profile using an edge detection algorithm and determining a rotor blade error by comparing the blade profile with a geometric model of a corresponding blade.

According to an aspect there is provided an apparatus for detecting damage to a rotor blade on a gas turbine engine, comprising a camera and controller, wherein the apparatus is configurable to carry out the method claimed herein.

According to an aspect there is provided a gas turbine engine comprising the apparatus as claimed herein.

According to an aspect there is provided an aircraft comprising the gas turbine engine as claimed herein.

According to an aspect there is provided a computer program that, when read by a computer, causes performance of the method as claimed herein.

The gas turbine engine may comprise a composite rotor. The camera may be configured to take images of rotors of the composite rotor. The rotor blades may be composite rotor blades. The method may be advantageous for composite rotor blades as damage may not be visible when the rotor is not operating, for example during ground inspection. The method may be advantageous for composite blades as damage to a composite blade may only be visible under load, for example during operation.

Operational loads may cause the blade to twist. The method may comprise requesting a geometric model that corresponds to the amount of blade twist caused by operational loads. The geometric model may have a blade twist due to operational loads that corresponds to the blade twist due to operational loads of the rotor blade.

The method may include storing the blade profile for comparison with a profile of an adjacent blade.

The rotor blade error may be determined by subtracting the profile of the blade from the geometric model (or optionally vice versa). The rotor blade error may be determined by comparing the locations of corresponding pixels, for example with each other or with a reference point.

The method may further comprise taking a second image of the rotor blade at the same time as the first but from a different angle, and the step of processing the image comprises determining a three dimensional blade profile from the first image and the second image.

The profile of the blade may be converted into a plurality of three dimensionally located data points. The method may comprise determining a plurality of blade profiles of the same blade from different angles, for example for generation of a three dimensional blade profile. A plurality of cameras may take a plurality of images, for example of the same blade at the same time, for example from different angles. A blade profile may be determined from each image, for example using 3D reconstruction and/or triangulation. A three-dimensional blade profile may be determined from the plurality of blade profiles of the same blade from different angles. The geometric model may comprise a plurality of three dimensionally located data points. The rotor blade error may be processed by comparing individual data points between the profile of the blade and the geometric model.

The rotor blade error may be the maximum deviation between the profile of the blade and the geometric model, and optionally may include the location of the maximum deviation. The rotor blade error may include all deviations across the blade portion that the profile of the blade and the geometric model relate to.

The edge detection algorithm may be one of a Canny, Marr-Hildreth, Sobel, or Prewitt edge detection algorithm.

The geometric model may be of a corresponding undamaged rotor blade, and the rotor blade error is the rotor blade damage or deformation.

The blade profile and/or the geometric model may comprise only information relating to substantially the leading edge or trailing edge.

The profile of the blade may comprise only (for example substantially only) the leading edge or trailing edge of the blade. The profile of the blade may comprise only (for example substantially only) information relating to the leading edge or trailing edge of the blade. The geometric model may comprise only (for example substantially only) the leading edge or trailing edge of the blade. The geometric model may comprise only (for example substantially only) information relating to the leading edge or trailing edge of the blade. Substantially only may include the leading edge and minor portions of adjacent edges. For example the minor portions may be included due to choice, processing method or due to the processing time required to removing them. Advantageously when the profile of the blade comprises only the leading or trailing edge of the blade the processing time is reduced.

The geometric model may be a historical profile of the blade. The historical profile of the blade may have less wear and/or erosion caused during operation. The rotor blade error may give an indication of the wear and/or erosion experienced by a blade during its operational life.

The rotor blade may be a compressor rotor blade. The rotor blade error may give an indication of ice formation along the edge of the rotor blade and/or static vane.

The geometric model may be a blade profile of a second blade. The method may further comprise the step of storing the profile of the blade for comparison against a blade profile of a second blade.

The method of detecting rotor blade damage may comprise processing a first blade profile and processing a second blade profile using an edge detection algorithm and comparing the first blade profile with the second blade profile to process a rotor blade error. The method may be performed on an operating rotor of a gas turbine engine.

Advantageously comparing a first blade of a rotor with a second blade of a rotor accounts for, for example, deformation due to operational loads and/or rotor wear as any changes to the profile of blades due to operation of the rotor may be substantially consistent across all blades.

The gas turbine engine may be a geared turbofan. The gas turbine may comprise a fan and a low pressure turbine. The gas turbine may further comprise a gear reduction between the fan and the low pressure turbine. The gear reduction may comprise an epicyclic gearbox, for example a star gearbox.

The gearbox may have any desired ratio, for example on the order of or at least 2, 2.5, 3, 3.1, 3.2, 3.3, 3.4, 3.5, 3.6, 3.7, 3.8, 3.9 or 4.

The rotational speed of the fan may vary in use. Generally, the rotational speed is lower for fans with a higher diameter. The rotational speed of the fan at cruise conditions may be less than 2500, 2300, 2000, 1900, 1800, 1600, 1400 or 1200rpm.

Advantageously when the method and/or apparatus described herein is applied to a geared fan the rotational speed of the fan is low enough to allow images to be captured to fidelity to allow accurate edge detection of the blade profile during operation. The rotational speed of the fan of a geared turbofan engine is lower than the rotational speed of the fan of a non-geared turbofan engine, for example a direct drive turbofan engine.

The gas turbine engine further may comprise an engine monitoring system. The controller may be configured to output the rotor blade error to the engine monitoring system.

The frame rate of the camera may be greater than 100 frames per second, and optionally greater than 120 frames per second.

The frame rate of the camera may be in the range 50 to 100 frames per second (fps), or 100 to 150 fps, or 150 to 200 fps. The frame rate of the camera may be greater than, for example, 50, 60, 70, 80, 90, 110, 130, 140 or 150 fps. The camera may be an industrial camera with high frame rate. The camera may be a visible light camera. The camera may be a thermal imaging camera. The camera may be an ultraviolet camera. A composite blade may comprise a dye to enhance detection of a rotor blade error, for example whereby the dye provides visual identification of blade damage.

The camera may be located forward of a fan and may be located such that it can take an image of an individual fan blade. The camera may be positioned in the nacelle, for example the inlet of the nacelle or the bypass duct. The camera may be positioned upstream or downstream from the fan. The camera may be positioned such that it has minimal impact on the aerodynamics of the inlet of the nacelle. The camera may be fixed in position. The camera may comprise shock absorbing mounts. The camera may be positioned so that its field of view only includes a portion of the fan. The camera may be positioned so that its field of view includes (for example only includes) the entirety of the leading edge or trailing edge of a fan blade (for example a single fan blade or a rotor). The camera may be positioned such that its field of view includes the whole fan, for example taking account of the nose cone.

The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25.

The fan of a gas turbine as described and/or claimed herein may have for example 16, 18, 20, or 22 fan blades.

Advantageously when only requiring a single fan blade to be in the field of view of the camera a lower resolution camera and/or narrower field of view may be selected.

The camera may be suitable for taking real time images of fan blades during operation of the gas turbine engine. The camera may be rugged such that it can continue to operate in the environmental conditions experienced at the nacelle inlet during operation of a gas turbine engine, for example at altitude or cruise conditions. The camera may be encased in a rugged casing. A cruise condition may correspond to: a forward Mach number of 0.8; a pressure of 23000 Pa; and a temperature of -55 deg C.

The aircraft may comprise a cockpit. The cockpit may comprise a user interface. The gas turbine engine may be configured to provide the rotor blade error to the user interface.

The method of detecting rotor blade damage may comprise the step of altering an operational parameter in response to the rotor blade error.

Advantageously the rotor blade error may be visible to the pilot of the aircraft during flight. Advantageously the pilot may take action upon receiving the rotor blade error, which may for example improve safety and reliability of the engine and may improve the economics of operating the engine. Advantageously the rotor blade error may allow the pilot to ascertain the type of damage experienced by the rotor blade. Advantageously the rotor blade error may improve the start-up and/or shutdown procedures, for example by improving safety or minimising the operational burden on the engine.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** illustrates a sectional side view of a gas turbine engine;
**Figure 2** illustrates a close up sectional side view of an upstream portion of a gas turbine engine;
**Figure 3** illustrates a close up sectional side view of an upstream portion of a gas turbine engine showing the arrangement of the apparatus according to various examples;
**Figure 4** illustrates a flow diagram of a method according to various examples;
**Figure 5** illustrates a schematic diagram of an apparatus according to various examples;
**Figure 6** illustrates a schematic diagram of an apparatus according to various examples including a cockpit;

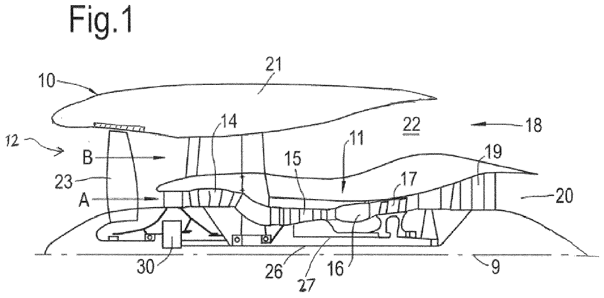

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

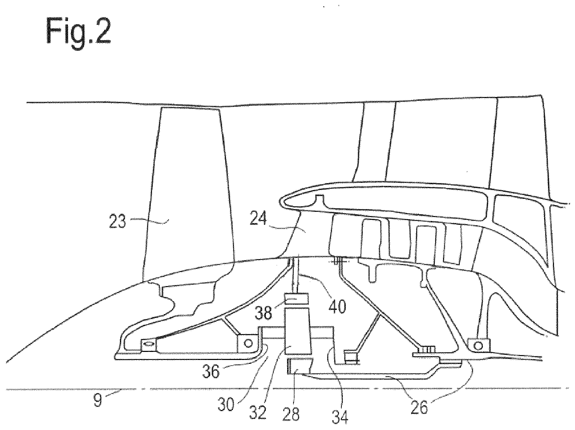

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

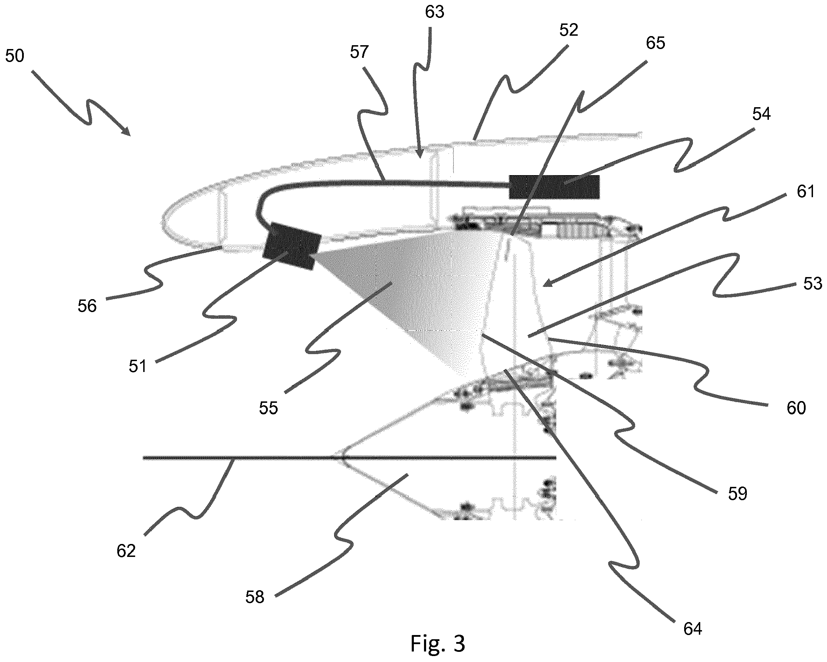

Figure 3 shows the forward portion of a gas turbine engine 50, which may be of similar configuration to the Figure 1 or Figure 2 examples. Figure 3 shows a nacelle 52 with an inlet 56. The nacelle 52 surrounds a fan rotor 61 comprising a plurality of fan blades 53, which are rotatatable about rotational axis 62. A nose cone portion 58 extends forward of the fan rotor 61 along the rotational axis 62. An apparatus 63 comprises a controller 54, a connection 57 and a camera 51. The camera 51 is arranged at the inlet 56 in the Figure 3 example. The camera 51 has a field of view 55. The controller 54 is housed in the nacelle 52 in the Figure 3 example, however in other examples it may be located elsewhere, for example on a different portion of the gas turbine engine or airframe. Each fan blade 53 has a leading edge 59 and a trailing edge 60. Each fan blade 53 extends from a hub 64 to a tip 65. The fan blade 53 is gas washed between the hub 64 and the tip 65.

The method of detecting rotor blade damage as described herein is based on using an edge detection algorithm to identify the leading edge of rotor blade, for example a fan blade as in the Figure 3 example. The edge, or blade profile, is detected from an image which may be obtained from the apparatus shown in Figure 3. The apparatus of Figure 3 is suitable for taking an image of a single fan blade. For example the field of view 55 in the Figure 3 example includes the entire leading edge 59. In the Figure 3 example the field of view 55 does not include fan blades on the opposite side of the nose cone 58 to the camera 51. This means that a lower resolution camera is required compared to if an image of the whole rotor was taken.

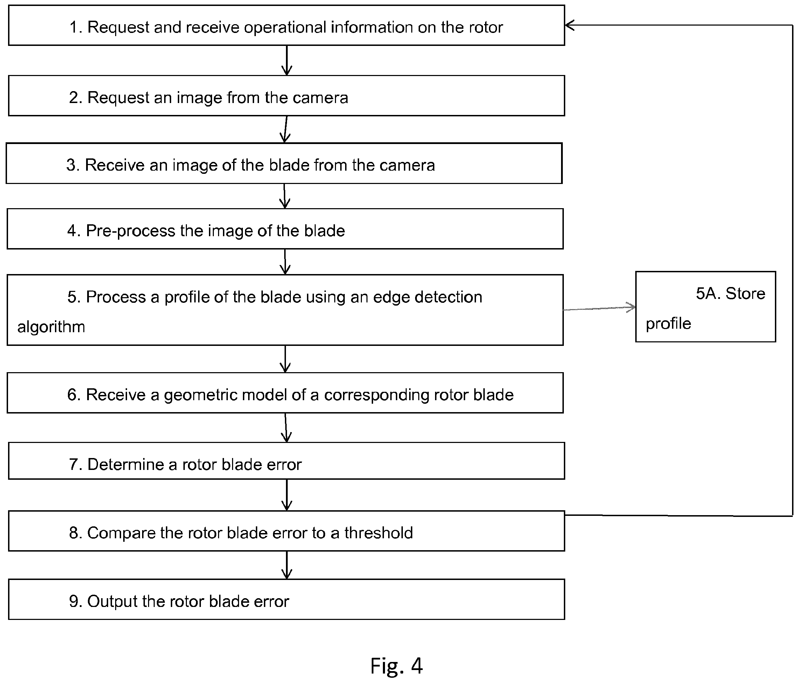

Figure 4 illustrates a flow diagram of a method according to various examples.

The method operates as the rotor is spinning at high speed, for example at cruise, and as such the timing of when the camera 51 is required to take images will preferably match the timing of when a rotor passes through the field of view 55. This can be achieved in a number of different ways.

For example the camera 51 can take images at a regular frequency and the controller 54 can select images where the rotor is in the correct position and discard the others. The regular frequency can be achieved by strobing or for example be set by the controller 54.

Alternatively, the controller 54 can request and receive the rotor position and/or speed, as shown in block 1 of Figure 4, for example from an engine monitoring system. The controller 54 can then request an image from the camera based on the expected position of the rotor, as shown in block 2 of Figure 4. The expected position of the rotor can be provided by, for example, the engine monitoring system or calculated by the controller. The controller can calculate the expected position from extrapolating from a historical position using the time elapsed since the historical position and the rotational speed of the rotor. The historical positional information may be measured from the last time the rotor was stationary, inferred from a time-stamped previous image, or from a positional measurement system, for example. The image is then transferred from the camera to the controller, as shown in block 3.

Alternatively the camera can take an image without knowledge of the position of the rotor and the edge detection algorithm can be applied as described herein, whereby the rotor may not be aligned with for example the centre of the image.

After the edge profile has been determined, a processing step may then be applied to rotationally translate the edge profile into a position and/or orientation whereby it can be compared to a geometric model that is oriented with, for example, the centre of the image. To rotationally translate the edge profile in the image, the image is converted into polar co-ordinates about the rotational axis. The rotational axis can be a defined position or orientation in the image, for example representing the fact the camera is fixed relative to the rotational axis. Alternatively the rotational axis can be determined from the image itself, for example representing the fact that slight movement or vibration in the camera during operation may render the rotational axis in a different position in the image. When in polar co-ordinates, the edge profile can be rotated within the image, for example using reference points such as the blade tip or base. For example the edge profile can be rotated to a position where it is a best match to a geometric model. As the edge profile is rotated in the image, because the camera may be angled with respect to the rotational axis, processing is required to alter the edge profile to account for field of view effects. For example processing may be required to ensure that the blade appears closer to the camera in the image. For example triangulation may be used to achieve this in combination with the polar frame of reference.

Before the edge detection algorithm is applied the controller can pre-process the image of the blade, as shown in block 4. This can include altering the contrast or brightness of the image to account for, for example, ambient light, for example whereby brightness is increased in an image taken at night or in lower visibility such as if the gas turbine engine is passing through a cloud. The controller can do this automatically, for example by applying a set brightness alteration depending on the time of day, or in response to the overall colour resolution or brightness of the image. Other pre-processing steps can be included as required. These may include, but are not limited to, recognition of images where, for example, zero visibility or solar reflection precludes (or partially) identifying the leading edge.

At block 5 the method includes processing a profile of the blade using an edge detection algorithm. The edge detection algorithm may be one of a Canny, Marr-Hildreth, Sobel, or Prewitt edge detection algorithm. The Canny edge detection method will now be discussed, whereby the elements of the Canny edge detection algorithm are generally known to the skilled person.

Gaussian smoothing is typically first applied to the image. This will slightly smooth the image which can reduce noise of the image that may produce false positive results when the edge detection is applied. The Gaussian smoothing can also improve the detection of very thin edges, as when they are smoothed out they are better identified by the edge detection algorithm.

To implement Gaussian smoothing a Gaussian filter is applied to the pixels of the image. The Gaussian filter is a kernel or matrix operator of a defined size, where the size affects the extent of the smoothing. The filter is applied to the pixels of the image in a convolution operation. The size of the filter for the method disclosed is assessed depending on the rotor design and arrangement, for example if the orientation of the camera captures blades with deep shadows behind then the method will be less affected by noise and a smaller filter can be selected.

The edge detection algorithm then identifies the intensity gradients in the image. For example where an edge is present in the image there will be a sharper gradient between light and dark that will be identified by the algorithm. The Canny algorithm uses four filters to detect horizontal, vertical and diagonal edges in the image as edges may be oriented in any direction. The edge detection operator returns a value for the first derivative in the horizontal direction and the vertical direction. From this the edge gradient and direction can be determined. As pixels are oriented in rows and columns, the direction can be rounded to vertical, horizontal or one of the two diagonals.

Once the gradient intensities have been determined across the image an edge thinning step is applied. This step is required as the edge may be blurred across an area of the image, especially after the step of Gaussian smoothing, and as such the gradient will increase towards the edge, be a maximum in the centre of the edge, and the decrease on the other side of the edge. Therefore to identify one line representing the edge, all gradient values that aren't the maximum are supressed or set to zero. In order to achieve this, depending upon the rounded direction of the gradient, the gradient is compared to the gradients on either side and if it is larger than both then it is marked as a maximum, otherwise it is marked as zero.

A threshold or double threshold is then applied. The edges have been identified by the maximum gradient but some edges are stronger, i.e. have a greater maximum gradient, than others. The threshold removes all edges with a maximum gradient less than a set criterion. Alternatively a double threshold removes very weak edges and identifies some edges as weak and some as strong. With respect to identifying the leading edges of the rotor blade, the threshold should be set appropriately. For example only a single edge may be required as the output. However the edge may not always have the same maximum gradient, for example depending upon the time of day or orientation of the sun and the depth of shadow behind the fan blade. There may be stronger and weaker edges in the image due to noise, environmental effects (such as solar reflections etc) or adjacent blades. The controller may be configured to adjust the thresholds for each image until a single edge corresponding to the leading edge of the fan blade is achieved. This may be achieved based on the expected location of the edge, or length of the edge, for example. Alternatively the thresholds may be based on empirical evidence gathered during trials.

Weak edge pixels can then be removed, for example by hysteresis or blob analysis, however this is optional with regard the present method as the object is to identify one long edge rather than a multitude of shorter edges in the image.

At block 5A the profile of the blade may be stored. This can, for example, allow the use of this blade profile for comparison against the blade profile of an adjacent blade in a later iteration of the method, or alternatively for review post flight. The profile of the blade may be stored for every profile of the blade. Alternatively the profile may be stored selectively. For example the profile may be stored due to operational information, or at a regular frequency. The profile may be stored and then deleted. For example the profile may be stored and then deleted unless the rotor blade error exceeds a threshold.

At block 6 the method includes receiving a geometric model of a corresponding rotor blade. The controller may request a geometric model from a local data store, or for example the engine monitoring system, or for example the geometric model may be stored in the memory of the controller itself. The geometric model preferably corresponds to the blade profile, for example to provide an appropriate basis for comparison and determination of blade error.

To achieve this blade twist may optionally be taken into account. During operation, as the blades are spinning, they experience loading that causes them to twist or untwist compared to their unloaded shape. This blade twist will change the shape of the leading edge. The amount of blade twist will be dependent upon the operational state of the gas turbine, for example the loading on the blades will be higher during take-off than at cruise. A series of geometric images may be stored and the appropriate image selected depending upon, for example, the operational state or current power output of the turbine. The controller can request/receive this information from the engine monitoring system and use it to request the appropriate geometric model.

The blade profile may not be in the same place for each image, for example due to small inaccuracies in the timing of the taking of an image with respect to the blade location. A series of geometric models, where the leading edge is at different orientations with respect to the camera may be stored, and the controller can access the appropriate image by using, for example, a best match algorithm between the blade profile and the series of geometric models. The best match algorithm can find the geometric model with the most pixels in common with the blade profile.

At this stage the blade profile is a 2D image. As such the geometric model is also a 2D model. The blade profile can be converted to a 3D model, for example using information regarding the orientation of the camera with respect to the blade or rotor, which will be fixed. By taking the 2D image of the leading edge, for example including a part of the tip, the 3D model can be produced using knowledge of the expected shape of the blade. In this case the geometric model can be a 3D model. The 3D geometric model can be of an as designed blade, for example. The 2D or 3D geometric model can be of an as designed blade or an as manufactured blade.

The leading edge will wear during the life of the blade. Therefore the geometric models can have models at different stages of wear, and the appropriate model selected based on the stage of the life of the blade.

Alternatively the geometric model can be the leading edge profile of a second (for example adjacent) blade. In this embodiment the method is followed to generate a blade profile of a first blade, which is then stored. A second image of a second blade is then taken at a later time step after the rotor has rotated a certain amount. The second blade may be directly adjacent, or may be separated by a few blades, or be in the same sector. Alternatively it may be the same blade as the first blade but after one or more full rotations of the rotor. The blade profile of the first blade can then be used as the geometric model for the analysis of the second blade. This embodiment has the advantage that the two blades will likely have, for example, similar amounts of twist or wear such that these two factors will not have to be taken account of before the blade error is analysed.

The blade error is then determined in block 7. If the blade profile and geometric model are 2D images, then this step may comprise comparing pixels of each and identifying differences between them. The error may be a 2D image itself, or a maximum deviation between the two images. The deviation at a number of different points may be determined, for example by identifying the pixel closest to a position in both the blade profile and geometric model images and then comparing the two locations. Alternatively the geometric model may be subtracted from the blade profile leaving only pixels associated with deviations.

If the blade profile and geometric model are 3D images then this step may comprise similar methods to the 2D images but on 3D co-ordinates instead of 2D co-ordinates. For example each 3D data point in the blade profile may be compared to the closest 3D data point in the geometric model. Alternatively the distance between one or more reference locations and the nearest data point in the blade profile and geometric profile may be compared.

The deviation is then compared to threshold values in block 8. The threshold may be set such that if it is exceeded then this represents rotor blade damage. The threshold may be refer to the maximum blade error. The threshold may refer to the deviation at one or more reference points. The threshold may be set before operation of the gas turbine engine or may vary depending on the operational condition of the gas turbine engine. The threshold may be set such that it avoids spurious errors, for example due to tolerances or known operational anomalies or conditions.

If the rotor blade error exceeds the threshold the method proceeds to block 9. If the rotor blade error does not exceed the threshold the method may iterate, for example back to block 1 in the Figure 4 example. In other examples the method may iterate to a different block.

The iteration represents the rotor blade method being performed a plurality of times during rotor operation, or even rotor rotation. For example every fan blade may be imaged by the method described herein as it passes through the field of view of the camera. Alternatively only a fraction of fan blades of the rotor may be imaged as they pass through the field of view of the camera. The method may be applied selectively during operation of the gas turbine engine, for example a larger fraction of fan blades of the rotor may be imaged during certain operational conditions. For example fan blades may be imaged at a greater frequency during one operational condition compared to another. Alternatively, during the flight of a gas turbine engine, the method may be applied selectively, for example during a first period the frequency of fan blade images may be high and during a second period the frequency of fan blade images may be low or zero.

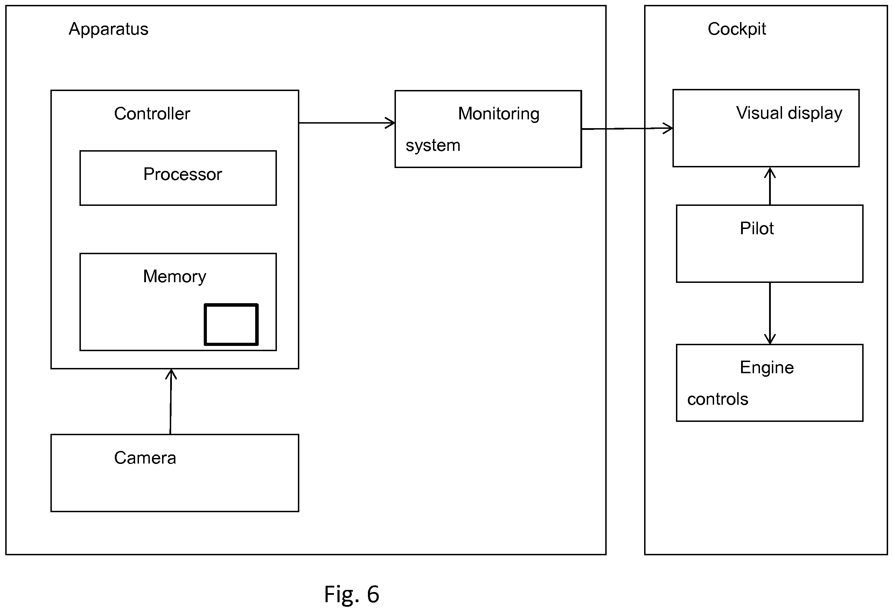

At block 9 the method includes outputting the rotor blade error. The rotor blade error may be output to an engine monitoring system. The rotor blade error may be output to an engine monitoring system for further transmittal to the cockpit of an airplane, for example using the apparatus shown in Figure 6. The pilot can take action as appropriate. The pilot may alter an engine characteristic. Maintenance may be scheduled to investigate a blade error.

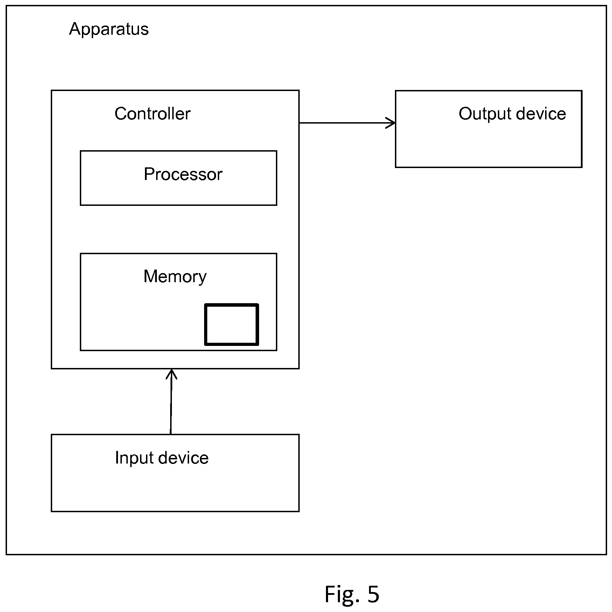

Figure 5 illustrates a schematic diagram of an apparatus according to various examples. The apparatus includes a controller, a user input device, and an output device. In some examples, the apparatus may be a module. As used herein, the wording 'module' refers to a device or apparatus where one or more features are included at a later time and, possibly, by another manufacturer or by an end user. For example, where the apparatus is a module, the apparatus may only include the controller, and the remaining features may be added by another manufacturer, or by an end user.

Figure 6 illustrates a schematic diagram of an apparatus according to various examples. The apparatus includes a controller, a camera, and a monitoring system. The monitoring system may be mounted on the gas turbine engine or aircraft. Figure 6 also shows a cockpit. The cockpit includes a visual display, a pilot and engine controls. The apparatus is coupled to the cockpit. In the Figure 6 example the monitoring system of the apparatus is coupled to the cockpit. In the Figure 6 example the monitoring system may be coupled to the visual display of the cockpit. The coupling may include any combination of wired and wireless links.

The controller, the user input device, and the output device may be coupled to one another via a wireless link and may consequently comprise transceiver circuitry and one or more antennas. Additionally or alternatively, the controller, the user input device and the output device may be coupled to one another via a wired link and may consequently comprise interface circuitry (such as a Universal Serial Bus (USB) socket). It should be appreciated that the controller, the user input device, and the output device may be coupled to one another via any combination of wired and wireless links.

The controller may comprise any suitable circuitry to cause performance of the methods described herein and as illustrated in Figure 4. The controller may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), to perform the methods.

In various examples, the controller may comprise at least one processor and at least one memory. The memory stores a computer program comprising computer readable instructions that, when read by the processor, causes performance of the methods described herein, and as illustrated in Figure 4. The computer program may be software or firmware, or may be a combination of software and firmware.

The processor may be located on the gas turbine engine 10, or may be located remote from the gas turbine engine 10, or may be distributed between the gas turbine engine 10 and a location remote from the gas turbine engine 10. The processor may include at least one microprocessor and may comprise a single core processor, may comprise multiple processor cores (such as a dual core processor or a quad core processor), or may comprise a plurality of processors (at least one of which may comprise multiple processor cores).

The memory may be located on the gas turbine engine, or may be located remote from the gas turbine engine, or may be distributed between the gas turbine engine and a location remote from the gas turbine engine. The memory may be any suitable non-transitory computer readable storage medium, data storage device or devices, and may comprise a hard disk and/or solid state memory (such as flash memory). The memory may be permanent non-removable memory, or may be removable memory (such as a universal serial bus (USB) flash drive or a secure digital card). The memory may include: local memory employed during actual execution of the computer program; bulk storage; and cache memories which provide temporary storage of at least some computer readable or computer usable program code to reduce the number of times code may be retrieved from bulk storage during execution of the code.

The visual display in the cockpit may be any suitable device for conveying information to a user. For example, the visual display may be a display (such as a liquid crystal display, or a light emitting diode display, or an active matrix organic light emitting diode display, or a thin film transistor display, or a cathode ray tube display), and/or a loudspeaker, and/or a printer (such as an inkjet printer or a laser printer). The apparatus may be arranged to provide a signal to the visual display to cause the visual display to convey information to a user, for example the pilot.

It should be appreciated that the method illustrated in Figure 4 may be performed 'offline' on data which has been measured and recorded previously. Alternatively it may be performed in 'real-time', that is, substantially at the same time that the data is measured. In this case, the controller may be coupled to the gas turbine engine 10 and may be an electronic engine controller or another on-board processor. Where the gas turbine engine 10 powers an aircraft, the controller may be an engine controller, a processor on-board the gas turbine engine 10, or a processor on-board the aircraft.

It will be understood that the invention is not limited to the embodiments above-described and various modifications and improvements can be made without departing from the concepts described herein. For example, the different embodiments may take the form of an entirely hardware embodiment, an entirely software embodiment, or an embodiment containing both hardware and software elements.

Except where mutually exclusive, any of the features may be employed separately or in combination with any other features and the disclosure extends to and includes all combinations and sub-combinations of one or more features described herein.

## Claims

1. A method of detecting rotor blade damage on a gas turbine engine comprising the steps of:
taking an image of a rotor blade;
processing the image to produce a blade profile using an edge detection algorithm;
determining a rotor blade error by comparing the blade profile with a geometric model of a corresponding blade.

2. The method according to claim 1, wherein the blade profile and/or the geometric model comprise only information relating to substantially the leading edge or trailing edge.

3. The method according to claim 1 or claim 2, wherein the edge detection algorithm is one of a Canny, Marr-Hildreth, Sobel, or Prewitt edge detection algorithm.

4. The method according to any one of the previous claims, wherein the geometric model is of a corresponding undamaged rotor blade, and the rotor blade error is the rotor blade damage or deformation.

5. The method according to any one of the previous claims, wherein geometric model is a blade profile of a second blade.

6. The method according to any one of the previous claims, further comprising the step of storing the profile of the blade for comparison against a blade profile of a second blade.

7. The method according to any one of the previous claims, wherein the geometric model has a blade twist due to operational loads that corresponds to the blade twist due to operational loads of the rotor blade.

8. The method according to any one of the previous claims, further comprising taking a second image of the rotor blade at the same time as the first but from a different angle, and the step of processing the image comprises determining a three dimensional blade profile from the first image and the second image.

9. An apparatus for detecting damage to a rotor blade on a gas turbine engine, comprising a camera and controller, wherein the apparatus is configurable to carry out the method according to any one of claims 1 to 8, and wherein optionally the frame rate of the camera is greater than 100 frames per second, and optionally greater than 120 frames per second.

10. A gas turbine engine comprising the apparatus according to claim 9, wherein optionally the gas turbine engine is a geared turbofan.

11. The gas turbine engine according to claim 10 wherein the gas turbine engine further comprises an engine monitoring system, and wherein the controller is configured to output the rotor blade error to the engine monitoring system.

12. The gas turbine engine according to claim 10 or 11, wherein the gas turbine engine comprises a composite rotor, and the camera is configured to take images of rotors of the composite rotor.

13. An aircraft comprising a cockpit and the gas turbine engine according to any one of claims 10 to 12, wherein the cockpit comprises a user interface and wherein the gas turbine engine is configured to provide the rotor blade error to the user interface.

14. A computer implemented method comprising the method steps according to claim 1 to 8.

15. A computer program that, when read by a computer, causes performance of the method as claimed in claim 1 to 8.
